# EUROPEAN PATENT SPECIFICATION

(11) **EP 1 582 762 B1**
(45) Date of publication and mention of the grant of the patent: **02.08.2006**
(21) Application number: 05102417.2
(22) Date of filing: 24.03.2005
(51) Int. Cl.: F16D 65/12

(54) **Brake disc**
Bremsscheibe
Disque de frein

(30) Priority: 29.03.2004 CZ 20040430
(43) Date of publication of application: 05.10.2005
(73) Proprietor: Bonatrans A.S., 735 94 Bohumin (CZ)
(72) Inventor: Martinasek, Marek, 74243, Pustejov 165 (CZ); VAMPOLA, Vladimir, 73543 Albrechtice (CZ); ZIMA, Radim, 73511 Orlová-Mesto (CZ)
(74) Representative: Pelikanova, Ivana

(56) References cited:
- WO-A-00/63575
- WO-A-97/33100
- DE-A1- 1 530 246
- DE-A1- 2 025 625
- GB-A- 940 618

## Description

### Field of the Invention

The present invention relates to a design of a brake disc, particularly to a disc to be used in rail vehicles of all models, where the vehicles are exposed to high-temperature strain when absorbing kinetic energy of the vehicle. The brake discs are possible to be used both in vehicles of high speed and lower weight and in vehicles of lower speed and high weight per axle.

### Background of the Invention

The already disclosed designs of brake disks comprise a hub, whereby, brake disk rims are fixed to this hub by various methods. The rims represent the actual friction surfaces of the brake disk. The disk hub serves for mounting of a brake disk assembly to the actual rail vehicle axle. Primarily, the connection between the brake disk rim and the brake disk hub has to provide a safe transfer of the twisting torsional moment, but on the other hand this connection has to allow also a rim dilatation both in the axial and the radial directions because of its heating-up during breaking. Many methods of mounting the brake disk rim on the brake disk hub have been disclosed. The most frequent mounting methods are screw joints provided with various casings bushings and springs, flexible elastic pins, wedge key joints or other joining elements with various deformation members that depend on solution of the joint shape, see for example the solution disclosed in WO-A-00 63575 or WO-A-97 33100. Joining elements designed as thin and long elements that are able to deform flexibly are also known.

A disadvantage of the above cited and described solutions is their limited applicability in case of high thermal loads requiring to allow relatively high dilatations because said systems are incapable of allowing them because they are not flexible enough. The joints wear off and subsequently their material is damaged permanently by fatigue. Another disadvantage is also that the joints providing transfer of the twisting torsional moment between the rim and the hub of the brake disk are production and material demanding in many cases.

### Summary of the Invention

The above mentioned drawbacks are substantially removed by a brake disk for high strain applicable particularly in rail vehicles, which brake disk rotates around its axis and consists of a hub provided with a bearing plate, a rim formed by two brake friction pads plates, which pads plates are joined together via through-holes in the bearing plate by joining elements, which joining elements are provided with dilatation members, which brake disk comprises a bearing plate provided with shaped cuts regularly repeated around the brake disk circumference, whereby, each of the cuts consists both of a joining region in the range of a first circumferential angle between a first point situated on the circumference of the bearing plate of an external radius R1, and a middle point situated in the cut of the bearing plate at the distance R3 from the axis of rotation, and of a flexible elastic region in the range of a second circumferential angle between the middle point and a last point of a shaped cut of the bearing plate, which last point is situated at the distance R5 from the axis of rotation, whereby, the remaining part in the region of a third circumferential angle between the last point of one shaped cut and the first point of the following shaped cut form a strength providing region of the bearing plate.

In a preferable embodiment of the brake disk, each shaped cut provided in the bearing plate is in its flexible elastic part between two points situated within the bearing plate at various distances from the axis of rotation provided with a shape defined in cylindrical coordinates by functions:
r = f(p) = K1.p³ + K2.p² + K3.p + R3 and u = f(p) = U2.p,
whereby, the parameter p is within the scope p(B,C) = <0;1>, constants K1, K2, and K3 are in the scopes:
K1 = <-70;-150>, K2 = <0;130>, and K3 = <-100;20> respectively, and U2 is value of the other second circumferential angle.

Preferably, the brake disk is formed so that the bearing plate is provided with at least three regular shaped cuts around its circumference.

Preferably, the shaped cuts are formed so that the distance of their middle point to the axis of rotation is at the distance R3 within the range of 0.8 to 0.95 multiple of the external radius R1 of the bearing plate.

The distance of the last point of each shaped cut to the axis of rotation is at the distance R5 preferably within the range from 0.5 to 0.7 multiple of the external radius of the bearing plate.

The bearing plate of the brake disk having attached to it the brake friction pads plates is mounted on the hub of the braking disk by means of the up to now commonly known and used methods, i.e. by means of screws, studs, pins, flexible elastic pins, etc., or the bearing plate is directly a part of the hub, i.e. it is produced with the hub as one piece. The hub of the brake disk is pressed on the axle of a wheel set.

Regular shaped cuts pass through the whole thickness of the bearing plate of a brake disk and they are designed and formed by the method of final elements. Three regularly repeated or alternated areas are formed in the bearing plate by the shaped cuts placed along the circumference of the bearing plate. The first region of the bearing plate is the fixing region, where through-holes are placed. Through the through-holes pass joining elements for joining of both break friction pads.plates. In a recommended design of the brake disk, size of the first circumferential angle is in the range from 1/24 to 1/12 of the bearing plate circumference. The second part of the bearing plate is the flexible elastic one, which flexible elastic part allows radial deformation caused by the effect of heating of the brake disk. The third region of the bearing plate is the strength providing region. The third region provides sufficient strength and load capacity of the whole brake disk rim assembly, whereby, the recommended size of the third circumferential angle is in the range from 1/90 to 1/24 of the bearing plate circumference.

To obtain the most advantageous results with regard to the possibility of radial deformation caused by the effect of heat produced by breaking, it is recommended to form the weight decreasing shaped cuts in the second flexible elastic part of the bearing plate in the scope of the second circumferential angle so that the shaped cuts have shape of a curve given by a polynomial of the third grade in combination with a line, by a part of a circular arc, or by a curve of the third grade. The cuts in the bearing plate are made preferably by such technology that sufficient shape and dimensional accuracy is ensured, and that at the same time, the bearing plate material structure is minimally influenced by heat development during making the cuts. The cut width is recommended to be no more than 2 mm.

An advantage of such braking disk is that flexibility elasticity of the whole system is not ensured only by the joining elements but also by the bearing plate of the brake disk with the shaped cuts. Length and shape of the shaped cuts are optimised so that maximal deformations of the brake disk in radial direction during an intensive heat-up caused by braking and the following dilatation are allowed.

The bearing plate and the hub of the brake disk are predominantly made of steel, the brake friction pads plates are made of cast iron or steel, eventually they are made of composite materials.

### Brief Description of the Drawings

The invention in its various aspects will now be described with reference to certain drawings thereof, in which:
Figure 1 is a cross-sectional view of one half of a brake disk and
Figure 2 is top plan view of a sole bearing plate of a brake disk.

### Example of an embodiment of the invention

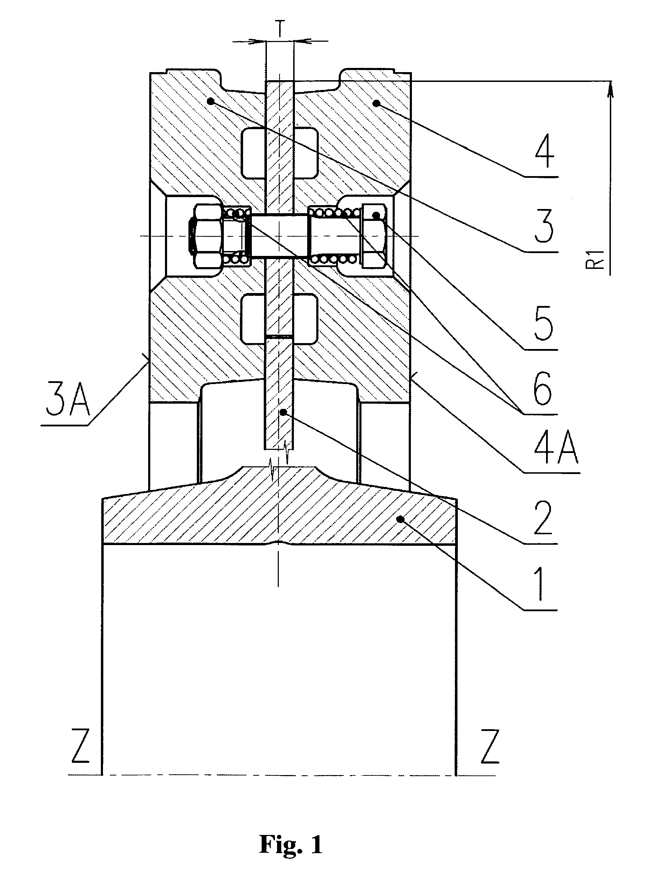

A brake disk shown in Fig. 1 comprises a hub 1 provided with a bearing plate 2, a rim formed by two brake friction pads plates 3, 4 with actual contact friction surfaces 3A and 4A for braking, and of joining elements 5 with dilatation members 6. The braking disk is a rotationally symmetric part rotating around axis Z. The joining elements 5 fix both brake friction pads plates 3, 4 to the bearing plate 2 of the hub 1. The bearing plate 2 is of external radius R1 and thickness T.

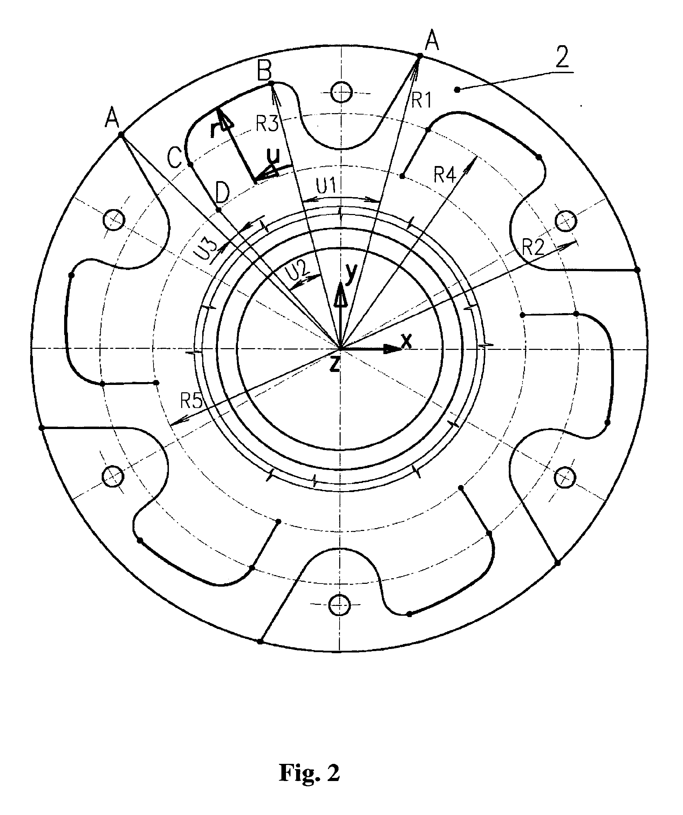

The actual bearing plate 2 of the brake disk, according to Fig. 2, is of external radius R1. On a pitch circle of the radius R2, which radius R2 is from 0.65 to 0.85 multiple of the external radius R1, there are regularly distributed through-holes for the joining elements 5. Along circumference of the bearing plate 2, six identically shaped cuts, regularly repeating themselves, are formed. Each shaped cut consists of two regions defined by individual circumferential angles U1 and U2. Between the first point A placed on the external radius R1 of the bearing plate 2 and the middle point B situated in a cross-section of the bearing plate 2, which cross-section is situated at the distance R3 from the axis Z of rotation, the distance R3 being in the range from 0.8 to 0.95 multiple of the external radius R1, the first region of the shaped cut is situated, which first region defines a sector of the bearing plate 2 in the scope of the first circumferential angle U1, which first circumferential angle U1 is selected to be in the range from 1/24 to 1/12 of the bearing plate 2 circumference. This first region represents the fixing part serving for joining of the brake friction pads plates 3, 4 to the bearing plate 2. The shaped cut from the middle point B to the point C, which point C is situated at a distance R4 from the axis Z of rotation, represents a section formed by a polynomial of the third grade, and in the cylindrical coordinates r, u the curve in the region from the middle point B to the point C is of a shape specified by the expression r = f(p) = K1.p³ + K2.p² + K3.p + R3 and u = f(p) = U2.p, whereby, the parameter p is in the scope p(B,C) = <0;1> and the constants K1, K2 and K3 are in the scopes K1 = <-70;-150>, K2 = <0;130>, K3 = <-100;20> respectively. The last part of the shaped cut running from the point C to a last point D is formed by a line, whereby, the last point D is situated at the distance R5 to the axis Z of rotation, which distance R5 is in the range of from 0.5 to 0.7 multiple of the external radius R1. The region between the middle point B and the last point D, in the range of the second circumferential angle U2, represents the second, flexible elastic region of the bearing plate 2 for securing primarily the radial deformation of the brake disk caused by heat, which heat is produced by braking. The third part in the range of the third circumferential angle U3 is the section between the last point D of one shaped cut and the first point A of the following shaped cut. This third part represents the strength providing region of the bearing plate 2. At the same time, the third circumferential angle U3 is selected to be in the range from 1/90 to 1/24 of the bearing plate 2 circumference.

### Industrial Use

The break disk according to this invention will find use in all models of rail vehicles provided with a disk brake, particularly those used in transport of persons, including the high-speed transport.

## Claims

1. A brake disk for high strain applicable particularly in rail vehicles, which brake disk rotates around its axis (Z) and consists of a hub (1) provided with a bearing plate (2), a rim formed by two brake friction pads plates (3,4), which pads plates (3,4) are joined together via through-holes in the bearing plate (2) by joining elements (5), which joining elements (5) are provided with dilatation members (6), **characterised in that** said bearing plate (2) is provided with shaped cuts regularly repeated around the brake disk circumference, whereby, each of the cuts consists both of a joining region in the range of a first circumferential angle (U1) between a first point (A) situated on the circumference of the bearing plate (2) of an external radius (R1), and a middle point (B) situated in the cut of the bearing plate (2) at the distance (R3) from the axis (Z) of rotation, and of a flexible elastic region in the range of a second circumferential angle (U2) between the middle point (B) and a last point (D) of a shaped cut of the bearing plate (2), which last point (D) is situated at the distance (R5) from the axis (Z) of rotation, whereby, the remaining part in the region of a third circumferential angle (U3) between the last point (D) of one shaped cut and the first point (A) of the following shaped cut form a strength providing region of the bearing plate (2).

2. A brake disk of Claim 1 **characterised in that** each shaped cut provided in the bearing plate (2) is in its flexible part between two points (B, C) of a shape defined in cylindrical coordinates (r, u) by functions:
r = f(p) = K1.p³ + K2.p² + K3.p + R3 and u = f(p) = U2.p,
whereby, the parameter p is within the scope p(B,C) = <0;1>,
and constants K1, K2, and K3 are in the scopes:
K1 = <-70;-150>, K2 = <0;130>, and K3 = <-100;20>.

3. A brake disk of claims 1 and 2 **characterised in that** the bearing plate (2) is provided with at least three regular shaped cuts around its circumference.

4. A brake disk of claims 1 to 3 **characterised in that** the distance of the middle point (B) to the axis (Z) of rotation is at the distance (R3) within the range of 0.8 to 0.95 multiple of the external radius (R1) of the bearing plate (2).

5. A brake disk of claims 1 to 4 **characterised in that** the distance of the last point (D) to the axis (Z) of rotation is at the distance (R5) within the range from 0.5 to 0.7 multiple of the external radius (R1) of the bearing plate (2).

## Patentansprüche

1. Bremsscheibe für hohe Beanspruchung, die besonders in Schienenfahrzeugen anwendbar ist, die rund um ihre Achse (Z) rotiert und aus einer mit Tragplatte (2) versehener Nabe (1), einem aus zwei Bremsreibplatten (3, 4) gebildeten Kranz besteht, wobei diese Bremsreibplatten (3, 4) durch Durchgangsbohrungen in der Tragplatte (2) mit Verbindungselementen (5) zusammen verbunden sind, wobei diese Verbindungselemente (5) mit Ausdehnungsgliedern (6) versehen sind, **dadurch gekennzeichnet, dass** die Bremsscheibe (2) mit regelmäßig rund um den Bremsscheibeumfang sich wiederholenden, geformten Schnitten versehen ist, wobei jeder von den Schnitten sowohl aus dem Verbindungsgebiet in dem Bereich des ersten Umfangswinkels (U1) zwischen dem ersten auf dem Umfang der Tragplatte (2) mit Außenradius (R1) liegendem Punkt (A) und dem in dem Schnitt der Tragplatte (2) in dem Abstand (R3) von der Rotationsachse (Z) liegendem mittleren Punkt (B), als auch aus dem flexiblen, elastischen Gebiet in dem Bereich des zweiten Umfangswinkels (U2) zwischen dem mittleren Punkt (B) und dem letzten Punkt (D) des geformten Schnitts der Tragplatte (2) besteht, wobei dieser letzte Punkt (D) im Abstand (R5) von der Rotationsachse (Z) liegt, wobei der restliche Teil in dem Bereich des dritten Umfangswinkels (U3) zwischen dem letzten Punkt (D) eines geformten Schnitts und dem ersten Punkt (A) des nächsten geformten Schnitts ein verfestigendes Gebiet der Tragplatte (2) bildet.

2. Bremsscheibe gemäß Anspruch 1, **dadurch gekennzeichnet, dass** jeder geformter, in der Tragplatte (2) gemachter Schnitt in dem flexiblen, elastischen Teil zwischen zwei Punkten (B, C) mit einer Form versehen ist, die in zylindrischen Koordinaten (r, u) mit Funktionen:
r = f(p) = K1.p³ + K2.p² + K3.p + R3 und u = f(p) = U2.P
definiert ist, wobei der Parameter p im Bereich p (B, C) = <0;1> liegt, und die Konstanten K1, K2, und K3 in dieser Reihenfolge in Bereichen:
K1 = <-70;-150>, K2 = <0;130> und K3 = <-100;20> liegen.

3. Bremsscheibe gemäß Anspruch 1 und 2, **dadurch gekennzeichnet, dass** die Tragplatte (2) mindestens mit drei regelmäßig geformten Schnitten rund um den Umfang versehen ist.

4. Bremsscheibe gemäß Anspruch 1 bis 3, **dadurch gekennzeichnet, dass** der Abstand vom mittleren Punkt (B) zu der Rotationsachse (Z) am Abstand (R3) im Bereich des 0,8- bis 0,95-fachen des äußeren Radius (R1) der Tragplatte (2) liegt.

5. Bremsscheibe gemäß Anspruch 1 bis 4, **dadurch gekennzeichnet, dass** der Abstand des letzten Punktes (D) zu der Rotationsachse (Z) auf dem Abstand (R5) im Bereich des 0,5- bis 0,7-fachen des äußeren Radius (R1) der Tragplatte (2) ist.

## Revendications

1. Disque à frein pour contrainte élevée, à l'usage, en particulier, aux véhicules ferroviaires, pivotant autour de son axe (Z) et se composant du moyeu (1) pourvu d'une plaque (2) de support et d'une couronne assemblée des deux plaques (3, 4) de friction de frein accouplées, l'une avec l'autre, par les éléments (5) d'assemblage pourvus des composants de dilatation (6) et passant par trous fabriqués dans la plaque de support **distingué par le fait** que la plaque (2) de support est garnie, sur sa circonférence, des découpures profilées se répétant régulièrement dont chaque de ces découpures se compose - d'un côté - de la partie d'attachement en dedans du premier angle (U1) circonférentiel entre le premier point (A) situé sur la circonférence de la plaque )2) de support avec le rayon (R1) et le point du milieu (B) situé sur la découpure de la plaque (2) de support à la distance (R3) de l'axe (Z) de pivotement, et - de l'autre côté - de la partie flexible située en dedans du deuxième angle (U2) circonférentiel entre le point (B) du milieu et le dernier point (D) de la découpure profilée de la plaque (2) de support situé à la distance (R5) de l'axe (Z) de pivotement, tandis que la partie restante en dedans du troisième angle (U3) circonférentiel entre le dernier point (D) d'une découpure profilée et le premier point (A) de la découpure profilée suivante est la partie résistante de la plaque (2) de support.

2. Disque à frein conformément la revendication 1 **distingué par le fait** que chaque découpure profilée dans la plaque (2) de support a, dans sa partie flexible entre les deux points (B,C), la forme définie dans les coordonnées (r,u) cylindriques par les fonctions
r = f(p) = K1.p³ + K2 . p² + K3 . p + R3 et u = f(p) = U2 . p,
où le paramètre p se trouve dans l'intervalle p(B,C) = <0;1> et les constantes K1, K2 et K3 dans les intervalles K1 = <70;-150>, K2 = <0;130> et K3 = <-100;20>.

3. Disque à frein conformément les revendication 1 et 2 **distingué par le fait** que la plaque (2) de support est garnie, sur sa circonférence, d'au moins trois découpures profilées régulières.

4. Disque à frein conformément les revendication 1 à 3 **distingué par le fait** que le point (B) du milieu est situé à la distance (R3) de l'axe (Z) de pivotement égale au multiple du rayon (R1) extérieur de la plaque (2) de support fois 0,8 à 0,95.

5. Disque à frein conformément les revendication 1 à 4 **distingué par le fait** que le dernier point (D) est situé à la distance (R5) de l'axe (Z) de pivotement égale au multiple du rayon (R1) extérieur de la plaque (2) de support fois 0,5 à 0,7.
